# EUROPEAN PATENT SPECIFICATION

(11) **EP 2 594 834 B1**
(45) Date of publication and mention of the grant of the patent: **18.03.2020**
(21) Application number: 12007719.3
(22) Date of filing: 14.11.2012
(51) Int. Cl.: F16K 31/40

(54) **Normally open solenoid valve with mixed and indirect actuation**
Stromlos offenes Magnetventil mit gemischter und indirekter Betätigung.
Électrovanne normalement ouverte avec actionnement indirect et mixte

(30) Priority: 16.11.2011 IT MI20112083
(43) Date of publication of application: 22.05.2013
(73) Proprietor: Ode S.r.l., 23823 Colico (LC) (IT)
(72) Inventor: Ghiggi, Mauro, 23823 Colico (LC) (IT)
(74) Representative: Riccardi, Sergio

(56) References cited:
- EP-A1- 2 267 348
- US-A- 2 705 608
- US-A1- 2007 241 298

## Description

The present invention is related to a normally-open solenoid valve for intercepting a fluid flowing from a supply conduit to a delivery conduit to the user; in particular the here described valve is a solenoid valve with mixed and indirect actuation and is configured for being controlled by a traction control kit. The present invention is in particular adapted for a normally-open solenoid valve with mixed or indirect actuation with the piloting system in axial alignment with respect to the main orifice.

For descriptive clarity is to be noted that here and below, as used from the person skilled in the art, the expression "normally open" refers to solenoid valves that allow the passage of fluid from the feeding to the user when the control coil is not powered. Again, the expression "mixed actuation" indicates the presence of two different systems for activating the shutter, each acting corresponding to a direction of movement of the shutter: in the specific case one first electromagnetic actuation or one piloting group is combined to one second actuation driven from a return spring. Finally, the expression "indirect actuation "comprises a shutter not acting directly on the main orifice but on a pilot orifice.

The current solenoid valves with mixed and indirect actuation (see fig.1 or EP 2 267 348 A1) are normal solenoid valves designed to interrupt or open a fluid passage through a piloting system, which by means of the pressure difference between the upper part of the diaphragm and the lower one, permits the opening or closure of the diaphragm itself. Therefore this system of operation is indicated for the activation of solenoid valves of large size and designed to handle high flow rates.

The closure of the main orifice in the current normally-open solenoid valves with mixed and indirect actuation - with piloting aligned with the main orifice - occurs through the excitation of a coil which ,electrically powered with a direct or alternate voltage, allows the generation of a magnetic field.

This field polarizes the ferromagnetic components of the solenoid with consequent attraction of the mobile core toward the defined fixed core, positioned between mobile core and main orifice. The mobile core pushes the shutter plugging the pilot orifice and creating stabilization between the inlet pressure and that of the upper part of the diaphragm. The resultant of the forces allows the closure of the diaphragm of the main orifice. At the moment of interruption of the power of the coil, the mobile core moves away from the fixed core by means of a spring positioned on the shutter, this means that the main orifice opens and creates an imbalance of pressures between the inlet and the upper part of the diaphragm. In this case the resultant of force allows the opening of the diaphragm on the main orifice.

In a solenoid valve with mixed actuation there is a tension spring between the diaphragm and the shutter able to open the diaphragm also in case of very low pressures. In the solenoid valve with indirect actuation it is instead always required, between feeding duct and supply duct, a minimum difference of pressure, generally about 0.5 bars, that guarantees the opening of the orifice. Nowdays, in a normally-open solenoid valve with mixed and indirect actuation the interception of the fluid, and consequently the closure of the corresponding duct or main orifice, takes place by means of the thrust of a shutter in the direction of the diaphragm used as the closure of the orifice.

For example, in US 2705608 a solenoid valve is described adapted for being kept open or closed for longer periods of time, without being affected by vibrations or hum due to the activation and maintenance of the electromagnetic field.

The here cited solenoid valves solve only partially the problem of vibrations and of wear of the solenoid valves of this kind, because they still suffer of problems of internal vibrations and hum caused by the internal elements and by the springs that, moving when subject to the activation of the magnetic field, cause this effect.

The solenoid valve of the present invention is composed of a body on which a lid and a sleeve assembly are fixed. These components are integral with each other and make up the fixed part of the solenoid valve. The mobile part comprises instead a control kit consisting of a plunger, a rod, a shutter, a diaphragm assembly and a set of springs positioned in a specific way.

In the solenoid valve of the present invention the closure of the orifice takes place by means of the traction exerted on the diaphragm by a shutter, said shutter being further bound to a connecting rod - with the interposition of a set of springs - to the mobile core.

The valves of the present invention can advantageously be used with different kind of fluids such as water, steam, air, oil, gas, fuel, syrup, chemicals and for applications in various environments, including in particular even those potentially explosive.

An object of the present invention is therefore to provide a normally open solenoid valve with mixed and indirect actuation that during use develops low temperatures and for this reason is more easily approved under the increasingly restrictive standards and therefore can be used in potentially explosive environments.

Another object of the present invention is to provide a device for the elimination of the play existing between the components of the solenoid valve.

Another object of the present invention is to limit the wear of the solenoid valve due to the internal components.

A further object of the present invention is to provide a valve with a greater resistance to wear and corrosion caused by fluids.

These and further objects are achieved by a solenoid valve according to the present invention, normally -open and with mixed and indirect actuation, comprising a conduit of use through a main orifice to be obstructed by a diaphragm and through a pilot orifice formed in said diaphragm that can be obstructed by a shutter, said valve being characterized by a connecting rod, fixed to a first end to said shutter and a second end connected elastically to the mobile core of said solenoid valve and said valve being configured for being driven in traction.

The solenoid valve of the present invention also provides a rod connected to the mobile core, by means of a connecting spring.

A second traction spring is placed beneath the diaphragm.

Furthermore, in a preferred embodiment of the present invention the solenoid valve includes a sealing member placed between the housing of the sleeve and the connecting rod and said sealing member separates the fluid from the valve piloting portion

In one preferred embodiment of the present invention and as further described with more details, the normally open solenoid valve with mixed and indirect actuation is controlled by a kit comprising a movable core, a connecting rod, a shutter, a diaphragm assembly and a set of springs. Said kit of command allows the solenoid valve of the present invention to pull the diaphragm through the shutter, in turn bound to the connecting rod with the mobile core.

The command of the said kit is similar to those adopted for applications on normally closed solenoid valves but is appropriately associated with a movable core, with the assembly diaphragm, with the rod and with the set of spring above described, allowing to function as a normally open solenoid valve.

A particular advantage of the present invention resides in the fact of being able to increase the magnetic section of the movable core as in the case of the normally closed solenoid valves: in the latter the temperature of the coil, also with alternate power supply, is moderate, while, with direct power supply, this dimensioning results in a greater force of attraction of the movable core from the fixed core. In a particularly advantageous manner the innovative configuration of the present invention allows therefore the use in environments at elevated temperatures and or with potentially explosive atmospheres.

Furthermore it is important how the application of alternate current can be carried out in an advantageous manner, even without the need of a bridge rectifier.
A further advantage of the present invention is given by the compensation and/or traction spring placed below the diaphragm, this particular positioning of the spring eliminates many vibrations within the valve body.

The just described advantages and further advantages and characteristics of the normally open solenoid valve with mixed and indirect actuation, in accordance with the present invention will be made clearer on reading the following detailed description of one of the preferred embodiments given with reference to the attached drawings in which similar or identical elements are indicated with the same reference number and wherein :

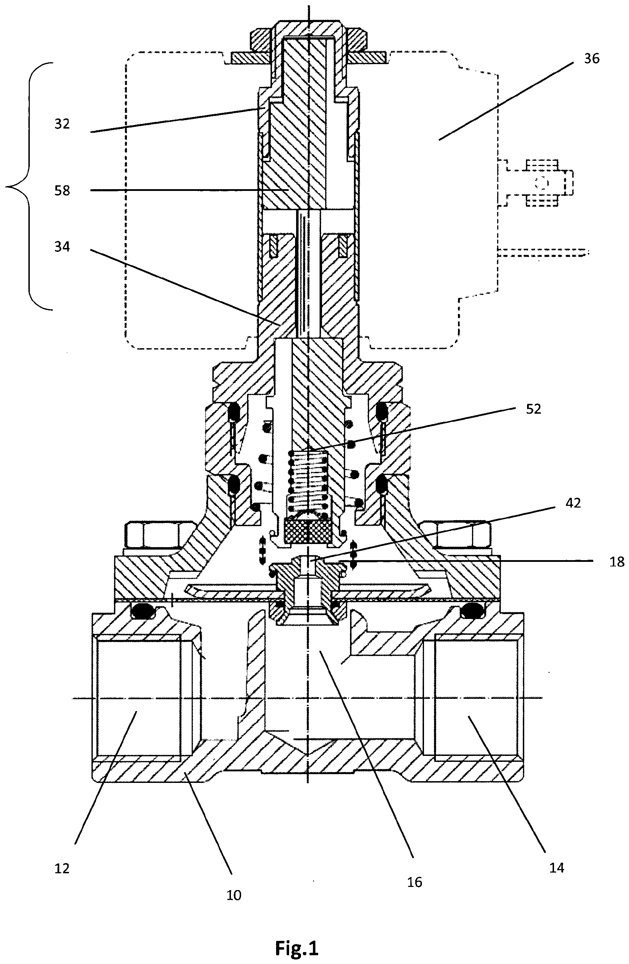

Fig. 1 is a sectional view of a normally open solenoid valve with mixed and indirect actuation of the prior art,
Fig. 2 is a sectional view of a preferred embodiment of the normally open solenoid valve with mixed actuation equipped with the device of the present invention, and
Fig. 3 is a sectional view of a another preferred embodiment of the normally open solenoid valve with mixed actuation equipped with the device of the present invention.

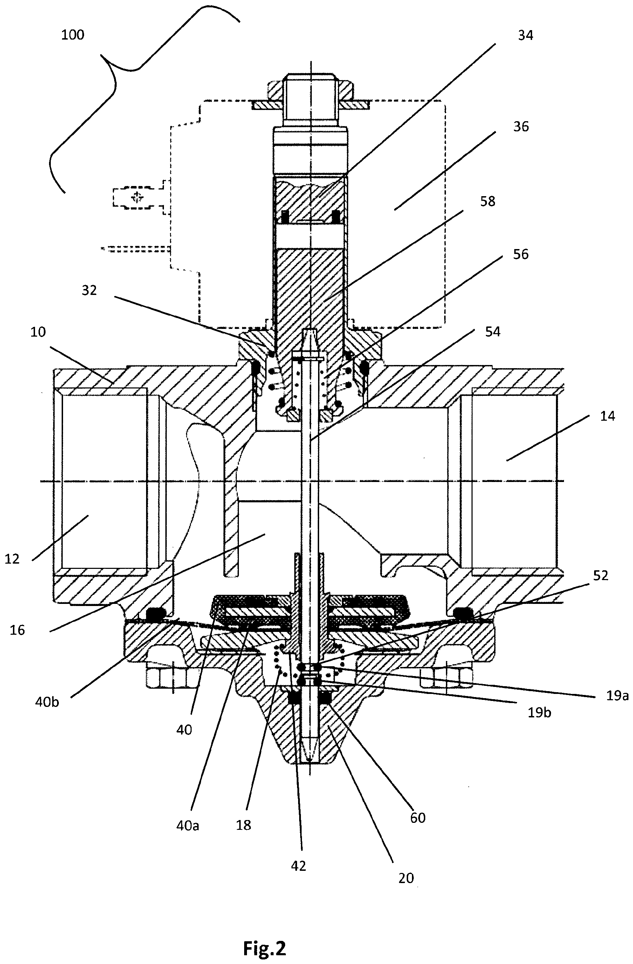

With reference now to fig.2 there is shown a solenoid valve 100 which has a body 10 on which are fixed at the bottom a lid 20 and a sleeve tube assembly 30. These components are integral with each other and make up the fixed part of the solenoid valve 100. In particular the sleeve assembly 30 includes the tube 32 sized to slidably receive the mobile core 58: the stroke of the latter is upwardly limited by the fixed core 34, also housed in the tube 32. Finally a coil 36 is fixed to the sleeve assembly 30, in the conventional way for this kind of valves, and can be powered to generate the necessary magnetic field to polarize the fixed core 34.

The moving part consists, however, of an assembly of mobile core 58 and diaphragm assembly 40, whose shape and size may vary depending on the solenoid valve 100, for being adapted to the specific application; with the same flexibility it is possible to choose the constituent materials, in this case, said materials, are for example metallic materials combined with elastomers. In detail, the assembly mobile core 58 is constituted by the following movable elements: the shutter 52, which is also achievable with the most appropriate material, and a connecting rod 54 fixed to said shutter 52 and elastically connected at a mobile core 58.

When the coil 36 is not energized, the mobile core 58 pushes the shutter 52 by the rod 54 causing the opening of the pilot orifice 42.

The imbalance of pressures that is then created between inlet 12 or supply fitting and the upper part 40a of the diaphragm 40, generated by the difference of area between the orifice 42 and the fill hole 40b, causes the detachment of the assembly diaphragm 40 form the main orifice 16 and thus the actual opening.

In the solenoid valve 100, immediately below the diaphragm 40, there is also a traction spring 18, which, acting between the diaphragm assembly 40 and the connection rod 54, allows the downward displacement of the diaphragm assembly 40 itself and hence the opening of the solenoid valve 100 even at very low pressures. This does not occur in a solenoid valve with indirect actuation, which opens the main orifice only at a predetermined minimum level of operating pressure.

Said spring 18 can be more properly defined as a tension spring and in particular, its placement at the bottom allows to eliminate numerous vibrations due to the passage of the flow that would be created if it were instead positioned above the diaphragm 40. Above and below the fastening of the spring 18 there are two seals 19a and 19b in the shape of O-ring, advantageously causing the spring 18, during its movement, not to collide against the lid 20, which in fact would cause a much faster wear.

The closure of the main orifice 16 of the normally open solenoid valves with mixed and indirect actuation, occurs through the excitation of a coil 36 which, electrically powered with a direct or alternate voltage, allows the generation of a magnetic field.

This field polarizes the ferromagnetic components of the solenoid valve 100, resulting in attraction of the mobile core 58 towards the fixed core 34. The mobile core 58 pulls the shutter via the rod 54 causing the closure of the pilot orifice 42. The stabilization of the pressure that is then created between the inlet and the upper part 40a of the diaphragm, through the hole 40b, causes the detachment of the diaphragm assembly 40 from the lid 20 and then the closing of the main orifice 16. Therefore the excitation of the coil 36, in the initial condition with the main orifice open, brings the shutter 52 - vie the connecting rod 54 - to obstruct the pilot orifice 42, like it occurs in a traditional solenoid valve with indirect actuation; at the time of the obstruction the diaphragm 40 is found to be directly driven by the mobile core 58, similarly to what happens in a traditional solenoid valve with direct actuation.

In this sense the solenoid valve 100 of the present invention maintains the advantage of the indirect actuation i.e. the effect of multiplication of force given by the ratio between the area of the pilot orifice 42 and the area of the main orifice 16 but, at the same time, takes the advantage of the direct actuation, i.e. the speed of the closing operation and the ability to operate even at very low pressures.

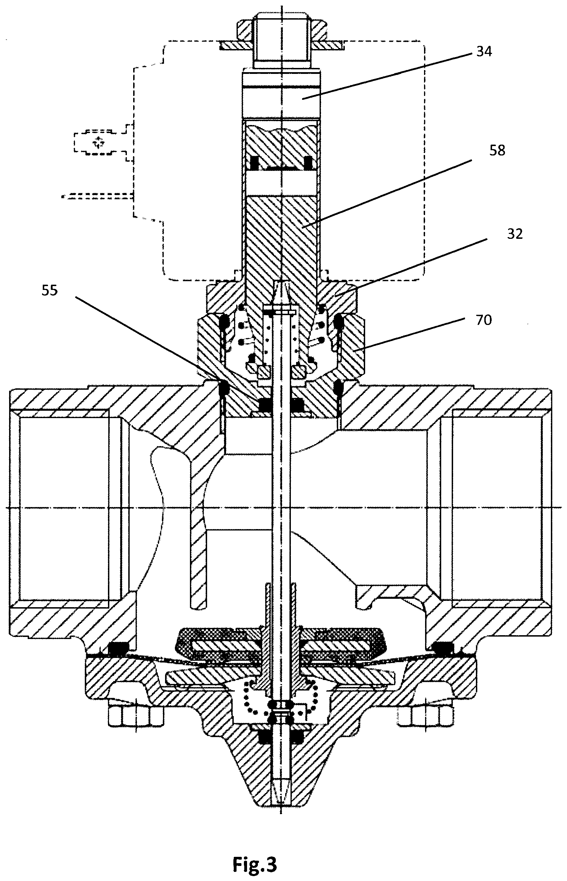

In a further preferred embodiment of the present invention, as shown in fig. 3, the solenoid valve 100 can be equipped with a sealing member 55. Said sealing member 55 is placed between the housing 70 of the tube 32 and the connecting rod 54. In this configuration equipped with housing 70 and soling member 55, the mobile core 58 and the fixed core 34 are completely isolated from the working fluid, thus making the solenoid valve advantageously much more resistant to corrosion phenomena on the magnetic part, as the fixed core 34 and the mobile core 58 are usually composed of ferromagnetic and therefore less resistant materials.

From the detailed description give above it is immediately clear that the solenoid valve 100 of the present invention lends itself particularly well for vacuum applications in which, i.e. the fluid pressure in the feeding conduit is lower than the atmospheric pressure or pressure in the valve outlet.

Furthermore the solenoid valve according to the present invention develops low temperature of use, and this makes it particularly suitable to be used in flammable environments.

With the solenoid valve 100 of the present invention it is possible to realize different types of devices i.e. in integrated configuration or in configuration in conjunction with the solenoid valve 100 itself. Below there are some of these devices that can be realized:
- Device for anti-hammer closure of pipelines: obtainable from the solenoid valve 100 by replacing the current design of the plate with one able to allow a slower and more gradual closure of the diaphragm on the main orifice.
- Manually operated device, that can be of two types:
   - Monostable, obtainable by means of a pusher, mechanically fixed, or fixed with other systems to push the rod 54 and in turn the shutter 52 and closes the pilot orifice 42, this replicating in fact the function performed by the excitation of the coil.
   - Bistable, obtainable by means of a specially designed knob, mechanically fixed or fixed with other systems, which pushes the movable core 58 to abut on the fixed core 34, by means of this movement the rod 54 and the shutter 52 elastically connected with the compensation spring 56, that closes the pilot orifice 42, this replicating in fact the function performed by the excitation of the coil.
- Device with manual reset: obtainable by increasing the stroke of the mobile core 58 relatively to the fixed core 34, to allow the actuation of the solenoid valve through the coil energisation and to match a manual action.
- Device with fluid separation: to release the mobile core portion 58 from the fluid operating in the valve: obtainable inserting a seal between the command rod 54 of the diaphragm assembly 40 and the seat of the body where the tube 32 is fitted , so as to definitively isolate the mobile core 58.

These are just some of the preferred embodiments of the solenoid valve according to the present invention, said solenoid valve may then submit alternative embodiments to the previously described preferred ones, in which modifications and changes regarding for example the geometry chosen for individual mobile and fixed members, the material used for each member and also the electrical specifications of the actuating system, may be made without departing from the scope of protection of the present invention as defined in the attached claims.

## Claims

1. A normally-open solenoid valve (100) with mixed and indirect actuation comprising a mobile core (58) and a fixed core (34), both housed within a tube (32), and comprising a supply conduit (12) in fluid communication with a delivery conduit (14) through a main orifice (16) obstructable by a diaphragm (40) and through a pilot orifice (42) formed in said diaphragm (40) and obstructable by a shutter (52), **characterized in that** the valve (100) is commanded by traction by said mobile core (58) of a solenoid (36) of said valve (100) through a connecting shaft (54) fixed at a first end to said shutter (52) and at a second end to said mobile core (58), wherein the opening of said valve (100) at very low pressures is achieved through a traction spring (18) placed beneath said diaphragm (40).

2. The solenoid valve (100) according to claim 1, wherein said connecting shaft (54) is in axial alignment with said main orifice (16).

3. The solenoid valve (100) according to claim 2, wherein said connecting shaft (54) is in axial alignment with said pilot orifice (42).

4. The solenoid valve (100) according to one or more preceding claims, wherein said connecting shaft (54) is connected to said core (58) by means of a compensation spring (56).

5. The solenoid valve (100) according to one or more preceding claims, wherein a sealing member (55) is placed between a housing (70) of said tube (32) and the connecting shaft (54), for isolating the mobile core (58) from the operating fluid.

6. The solenoid valve (100) according to one or more preceding claims, wherein said sealing member (55) completely separates the fluid from the mobile core (58) and the fixed core (34).

## Patentansprüche

1. Stromlos offenes Magnetventil (100) mit gemischter und indirekter Betätigung, mit einem beweglichen Kern (58) und einem festen Kern (34), wobei die beiden Kerne in einem Rohr (32) angeordnet sind, und mit einer Zufuhrleitung (12), die mit einer Einsatzleitung (14) durch eine von einer Membran (40) verstopfbare Hauptöffnung (16) sowie durch eine aus der Membran (40) herausgearbeitete und von einem Schieber (52) verstopfbare Leitöffnung (42) in flüssiger Verbindung steht, **dadurch gekennzeichnet, dass** das Magnetventil (100) mittels des Zuges vom beweglichen Kern (58) einer entsprechenden Spule (36) des Ventils (100) durch eine Verbindungsstange (54) angetrieben wird, worin diese Verbindungsstange (54) an ihrem ersten Ende auf den Schieber (52) bzw. an ihrem zweiten Ende auf den beweglichen Kern (58) befestigt wird, wobei das Ventil (100) an den Niederdrücken durch eine unter der Membran (40) angeordnete Zugfeder (18) geöffnet wird.

2. Magnetventil (100) nach Anspruch 1, worin die Verbindungsstange (54) eine axiale Ausrichtung mit der Hauptöffnung (16) aufweist.

3. Magnetventil (100) nach Anspruch 2, worin die Verbindungsstange (54) eine axiale Ausrichtung mit der Leitöffnung (42) aufweist.

4. Magnetventil (100) nach einem bzw. mehreren vorhergehenden Ansprüchen, worin die Verbindungsstange (54) mit dem beweglichen Kern (58) durch eine Ausgleichungsfeder (56) verbunden ist.

5. Magnetventil (100) nach einem bzw. mehreren vorhergehenden Ansprüchen, worin eine Dichtung (55) zwischen einer Aufnahme (70) des Rohres (32) und der Verbindungsstange (54) angeordnet ist, um den beweglichen Kern (58) von der Arbeitsflüssigkeit zu isolieren.

6. Magnetventil (100) nach einem bzw. mehreren vorhergehenden Ansprüchen, worin die Dichtung (55) die Flüssigkeit vom beweglichen Kern (58) bzw. vom festen Kern (34) völlig trennt.

## Revendications

1. Électrovanne (100) normalement ouverte avec actionnement indirect et mixte, munie d'un noyau mobile (58) et d'un noyau fixe (34), tous les deux étant disposés dans un fourreau (32), et comprenant une conduite (12) d'alimentation en communication fluidique avec une conduite d'utilisation (14) par un orifice principal (16) qui peut être obstrué par une membrane (40) ainsi que par un orifice pilote (42), qui est formé dans la dite membrane et peut être obstrué par un tournant (52), **caractérisée en ce que** la vanne (100) est actionnée par traction du dit noyau mobile (58) d'une bobine (36) de la vanne (100), moyennant une barre de raccordement (54) fixée avec sa première extrémité au dit tournant (52) et avec sa deuxième extrémité au dit noyau mobile (58), dont l'ouverture de la vanne (100) à pression très basse est obtenue par un ressort de traction (18) disposé au-dessous de ladite membrane (40).

2. Électrovanne (100) selon la revendication 1, dont ladite barre de raccordement (54) est en alignement axial avec le dit orifice principal (16).

3. Électrovanne (100) selon la revendication 2, dont ladite barre de raccordement (54) est en alignement axial avec le dit orifice pilote (42).

4. Électrovanne (100) selon une ou plusieurs revendications précédentes, dont ladite barre de raccordement (54) est connectée au dit noyau mobile (58) par un ressort compensateur (56).

5. Électrovanne (100) selon une ou plusieurs revendications précédentes, dont un élément d'étanchéité (55) est disposé entre un logement du fourreau (32) et la barre de raccordement (54) pour isoler le noyau mobile (58) du fluide de travail.

6. Électrovanne (100) selon une ou plusieurs revendications précédentes, dont ledit élément d'étanchéité (55) sépare complètement le fluide du noyau fixe (34) et du noyau mobile (58).
